# EUROPEAN PATENT SPECIFICATION

(11) **EP 1 407 721 B1**
(45) Date of publication and mention of the grant of the patent: **17.08.2005**
(21) Application number: 03425650.3
(22) Date of filing: 06.10.2003
(51) Int. Cl.: A61C 1/00

(54) **An auxiliary unit for sanitising treatment of dental equipment**
Nebenaggregat zur Desinfektion einer zahnärztlichen Ausrüstung
Unité auxiliaire pour la désinfection d'un équipement dentaire

(30) Priority: 08.10.2002 IT BO20020634
(43) Date of publication of application: 14.04.2004
(73) Proprietor: CASTELLINI S.p.A., I-40013 Castel Maggiore (Bologna) (IT)
(72) Inventor: Castellini, Franco, 40124 Bologna (IT)
(74) Representative: Lanzoni, Luciano

(56) References cited:
- WO-A-02/38069
- US-A- 6 019 117
- US-A- 6 142 170
- US-B1- 6 250 920

## Description

The present invention relates to an auxiliary unit for sanitising dental equipment, such as dental units.

At present, in the manufacturing of dental equipment it is almost normal practice to structure the water system, that is to say the circuits designed to allow the supply of fluids used by dental equipment and patients (water or physiological saline for tumblers and handpieces), or consumer units (swilling water for the spittoon) with sterilisation / disinfection systems of these circuits.

With increases in general standards of hygiene and with dental apparatus and equipment becoming more and more "fragile", several design solutions have in fact been found for the water and air circuits of dental units, not only to guarantee their efficient operation and durability but also to maintain the sterility of the conduits both during and between patient treatments.

At present, the structure of these water circuits comprises a first main line supplying water from the mains, and a second main line supplying air from an external source (compressor) for the pneumatic circuit of the dental unit. Each of these circuits has a plurality of branches leading to the above-mentioned operating and accessory equipment fitted with control valve means for the supply of pressurised fluids.

As already mentioned various systems have been designed on the basis of different methods aimed at improving the functioning and disinfection of these fluid lines or parts of them.

By way of an example, the Applicant designed a so-called "total hygiene" system, see patent EP 734.692, where the structure of the circuits is rationally designed within the construction project of the dental unit and already includes all the solutions which over time have been invented in order to obtain both maximum hygiene in the circuits and a real and complete isothermicity and isotonicity of the fluids which they supply to the instruments.

In practice this type of dental unit is already equipped to obtain disinfection / sterilisation cycles on the water circuit; in other words, all the components are built into the body of the dental unit.

However, due to problems regarding structure, dimensioning, final cost, area of application and design type, some dental units are not equipped with this dedicated system for disinfection / sterilisation and it does not at present appear to be possible to fit them with a practical and rational structure which does not substantially interfere in the construction context of the existing circuits. Dental units such as these can be retrofitted with an auxiliary sanitising unit such as disclosed in US 6,142,170 which additionally discloses the features of the preamble of claim 1.

The aim of the present invention is, therefore, to create an improved auxiliary unit for sanitising dental equipment and that can be applied to units not equipped with such systems quickly, rationally, with limited structural variations and with extremely limited overall dimensions.

This aim is achieved by means of an auxiliary sanitising unit applicable on dental equipment as described in claim 1.

The technical features of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a front schematic view, with some parts removed to show others better, of part of a dental unit on which the auxiliary unit according to the present invention is applied.
- Figure 2 shows a diagram of the circuit of an auxiliary unit according to this invention and of part of the equipment that can be connected to the auxiliary unit.

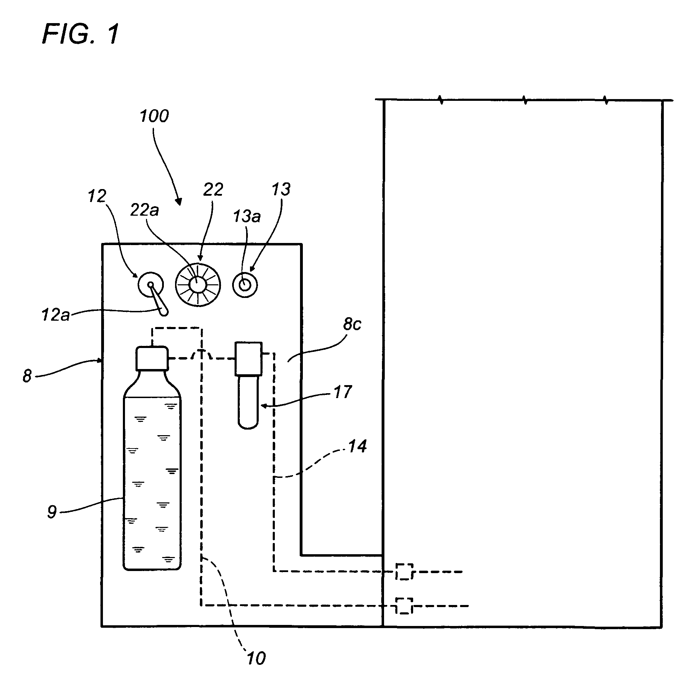

With reference to the accompanying drawings, and with particular reference to figure 1, the auxiliary sanitising unit, labelled 100, is fitted on dental equipment, such as for example, dental units R, of which only a part is shown in figure 1. In particular, this unit 100 is especially indicated for dental units R not equipped from the outset with systems for disinfection / sterilisation of the water circuits.

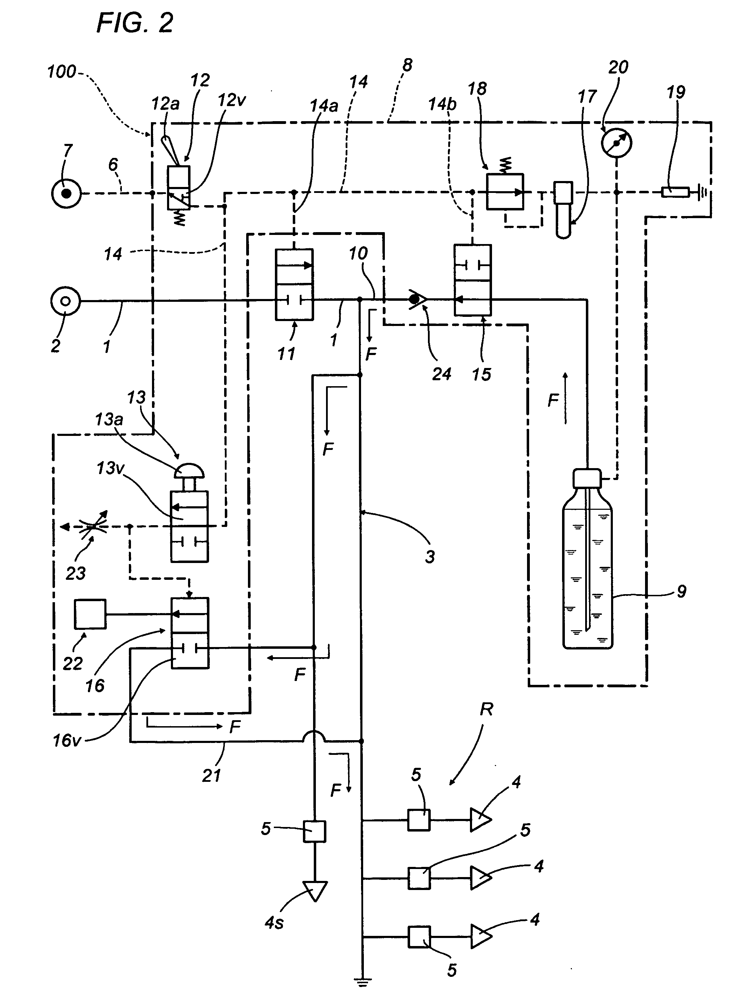

According to what is shown in the circuit diagram in figure 2, these dental units R comprise:
- a fluid supply line 1 connected, at one end, to the general water mains 2 and, at the other, to the dental unit R by means of a first branch 3 which supplies a series of instruments - patient 4 comprising a plurality of handpieces (shown here schematically, since they are not strictly part of the invention);
- each of the handpieces 4 is equipped with first means 5 for intercepting the fluid so as to allow its supply, when required, in other words a control valve positioned on the handpiece;
- an air supply line 6, connected at its infeed to a source 7 of compressed air (for example a known compressor) and at its outfeed to a circuit of the dental unit R (not shown here).

In particular, a syringe 4s can be included in the plurality of handpieces 4 present on the first branch 3 supplying fluid.

This dental unit R can be connected to the auxiliary unit 100 which essentially comprises (see figures 1 and 2):
- a body 8, outside the dental unit R, supporting at least one container 9 of disinfectant / sterilising fluid which can be connected, by means of a first conduit 10, to the fluid supply line 1;
- second means 11 of interception positioned along the fluid supply line 1 and designed to allow closure of the instrument fluid supply at least in the first branch 3 during the sanitising treatment using the disinfectant / sterilising fluid;
- means 12 and 13 for preparing and implementing the sanitising treatment, acting at least on the first conduit 10 and on the second interception means 11, to allow the sanitising fluid to pass through the first branch 3.

More specifically, the support body 8 can consist of a protective guard 8c inside which the said elements are arranged and applied, in addition to protecting the conduit sections connecting the container 9 and dental unit R.

According to what is shown in figure 2, the preparing and implementing means 12 and 13 are positioned along a second air supply conduit 14 connected to the air supply line 6, and housed in the support body 8.

These preparing and implementing means 12 and 13 act on the second means 11 of interception, and on third means 15 of interception positioned on the first conduit 10 and housed in the support body 8.

In more detail, see figure 2 again, these preparing and implementing means 12 and 13 are divided and positioned in two separate areas of the second air supply conduit 14: the preparation means 12 are close to the connection between the second conduit 14 and the air supply line 6, so as to allow the activation of the second and third means 11 and 15 of interception positioned on the first conduit 10; the implementation means 13 are positioned on the second conduit 14 and close to fourth means 16 of interception, acting on the first branch 3 of fluid supply to the handpieces 4.

At a structural level, the preparation means 12 can consist of a first valve 12v with two positions, respectively, for closure of a connection between the air supply line 6 and the second conduit 14, and a position connecting the air supply line 6 and the second conduit 14 (the position shown in figure 2).

This valve 12v can be controlled by means of a relative lever 12a positioned on the outside of the support body 8 (see figure 1).

The second air conduit 14 also has two branches 14a and 14b connecting it to the second and third means 11 and 15 of interception positioned on the first conduit 10: in this way the flow of air allows the second and third means 11 and 15 of interception to switch to the appropriate configuration for the passage of disinfectant / sterilising fluid, that is to say the second means 11 in the closing position and the third means 15 in the opening position (as can be seen in figure 2).

The second air conduit 14 leads to the container 9 of disinfectant / sterilising fluid so as to allow a flow of disinfectant / sterilising fluid in the first conduit 10 at the connecting position of the first valve 12v.

The implementation means 13 consist of a pneumatically controlled second valve 13v acting on the fourth means 16 of interception consisting of a third fluid passage valve 16v positioned on a second branch 21 connecting the first branch 3 supplying the syringe 4s to the branches connecting the remaining handpieces 4 so as to allow the flow of disinfectant / sterilising fluid on programmed activation of the unit 100.

The valve 13v may be controlled by an appropriate pushbutton 13a positioned on the support body 8.

By way of example, the outlet of the second branch 21 for the passage of the disinfectant / sterilising fluid can be situated upstream of the first means 5 of interception positioned on the respective handpieces 4 with respect to the fluid flow direction F.

Timer means 22 can act on the third interception valve 16v to allow programming of the sanitising treatment time, that is to say activation of the flow of disinfectant / sterilising fluid in the first branch 3.

These timer means 22 can also comprise an adjustment knob 22a positioned on the support body 8 and controllable by the operator.

The number 23 in figure 2 indicates means for adjusting the passage of air at the pneumatically controlled second valve 13v, designed to allow the discharge of the air circulating in the area of the second air conduit 14, close to said second valve 13v at the end of the treatment, that is to say on closure of the first valve 12v.

Upstream of the container 9 of disinfectant / sterilising fluid the second air conduit 14 can be equipped with an air filtering unit 17 so as to make the air entering the container 9 as sterile as possible.

In addition to the hygiene control of the air entering the container 9, the second air conduit 14 can be equipped with a means 18 for reducing the pressure of the air so as to allow a controlled flow of the air in the fluid container 9.

In combination with this reduction means 18, the second conduit 14 can also be equipped with a safety air outlet 19 designed to allow the discharge of the air in the closed position of the connection between the air supply line 6 and the second conduit 14.

A further safety addition can be to apply a device 20 on the second conduit 14 to measure and display the pressure in the second conduit 14.

A check valve 24 can be fitted between the second and third means 11 and 15 of interception in order to prevent a flow of fluid towards the container 9 of disinfectant / sterilising fluid at the end of the treatment.

In practice, the unit 100 described above is applied to dental units R not fitted at the outset with systems for the disinfection / sterilisation of the water circuits.

Application is carried out by positioning the support body 8 close to the dental unit R and, subsequently, attaching the seconds means 11 of interception to the fluid supply line 1, while the preparation means 12 are connected to the air supply line 6 and the container 9 and the third means 15 of interception are connected to the fluid supply branch 3.

The second branch 21 and the relative fourth means 16 of interception are then connected to the first fluid supply branch 3.

The unit 100 is at this point ready to be used and the operator or the dentist can thus start the flow of disinfectant / sterilising fluid inside the branch 3 by operating the lever 12a which activates the valve 12v and allows the flow of air inside the second conduit 14.

This flow causes the closure of the second means 11 and the opening of the third means 15 with a consequent interruption of the water supply to the instruments and subsequent supply of disinfectant / sterilising fluid from the container 9 towards the branch 3 (see arrows F).

The operator or the dentist can select the treatment time by turning the knob 22a which adjusts the timer means 22 situated on the support body 8 and then press the pushbutton 13a which activates the second valve 13v that allows air to flow towards the fourth means 16 positioned on the second fluid supply branch 21.

Opening of the third valve 16v causes the disinfectant / sterilising fluid to pass into the second branch 21 and thus towards the handpieces 4. To simplify the description only the instrument handpieces 4 are considered, although the second branch 21 can supply other devices of the dental unit, not shown here, such as the spittoon or the rinsing tumbler, without limiting the invention.

The auxiliary unit as described above therefore achieves the preset aims thanks to an extremely simple and easy to use construction architecture.

The overall dimensions of the unit are reduced and allow it to be used in any type of environmental situation.

Very few structural variations to the dental unit are necessary and they do not require applications that cause inconvenience during and after assembly. The accessories of the unit ensure a high degree of safety during its use over time with the possibility of varying the sanitising treatments to be carried out with just a few simple operations to replace the fluid container. The possibility of timing the treatments makes the unit equivalent in terms of quality to a system built into the dental unit from the outset and with acceptable costs.

The invention described can be subject to modifications and variations within the scope of the claims.

## Claims

1. An auxiliary unit for sanitising treatments on dental units (R) comprising at least:
- a fluid supply line (1) connected, at one end, to the general water mains (2) and, at the other, to the dental unit (R) by means of a first branch (3) which supplies at least a series of instruments - patient (4) comprising a plurality of handpieces; first means (5) for intercepting the fluid, being fitted on the handpieces (4) so as to allow the supply, when required;
- a body (8), external to the dental unit (R), supporting at least one container (9) of disinfectant / sterilising fluid which can be connected, by means of a first conduit (10), to the fluid supply line (1);
- second means (11) of interception positioned on the fluid supply line (1) and designed to allow closure of the fluid supply at least in the first branch (3) during the treatment using the disinfectant / sterilising fluid;
- means (12, 13) for preparing and implementing the treatment, acting at least on the first conduit (10) and on the second means (11) of interception, so as to allow the treatment fluid to pass through the first branch (3);
**characterised in that** it comprises at least:
- an air supply line (6) connected at its infeed to a source (7) of compressed air and at its outfeed to the dental unit; said preparing and implementing means (12, 13) being positioned on a second air supply conduit (14) connected to the air supply line (6), and housed in the support body (8).

2. The unit according to claim 1, **characterised in that** the preparing and implementing means (12, 13) acts on the second means (11) of interception and on third means (15) of interception positioned on the first conduit (10) and housed in the support body (8).

3. The unit according to claim 2, **characterised in that** the preparing and implementing means (12, 13) are divided and positioned in two separate areas of the second air supply conduit (14), the preparing means (12) being close to the connection between the second conduit (14) and the air supply line (6), so as to allow the activation of the second and third means (11, 15) of interception positioned on the first conduit (10), and the implementation means (13) being positioned on the second conduit (14) and close to fourth means (16) of interception, acting on the first branch (3) of fluid supply to the handpieces (4).

4. The unit according to claim 3, **characterised in that** the preparing means (12) consist of a first valve (12v) with two positions, respectively, for closure of the connection between the air supply line (6) and the second conduit (14), and a position connecting the air supply line (6) and the second conduit (14) with two branches (14a, 14b) that connect with the second and third means (11, 15) of interception positioned on the first conduit (10) .

5. The unit according to claim 4, **characterised in that** the second air supply conduit (14) leads to the container (9) of disinfectant / sterilising fluid so as to allow a flow of disinfectant / sterilising fluid in the first conduit (10) at the connecting position of the first valve (12v).

6. The unit according to claim 5, **characterised in that** the second air supply conduit (14) is equipped with an air filtering unit (17) positioned upstream of the container (9) of disinfectant / sterilising fluid.

7. The unit according to claim 5, **characterised in that** the second air supply conduit (14) is equipped with means (18) to reduce the pressure of the air so as to allow a controlled flow of the air in the fluid container (9).

8. The unit according to claim 4, **characterised in that** the second air supply conduit (14) is equipped with a safety air outlet (19) designed to allow the discharge of the air in the closed position of the connection between the air supply line (6) and the second conduit (14).

9. The unit according to claim 4, **characterised in that** the second air supply conduit (14) is connected to a device (20) to measure and display the pressure in the second conduit (14).

10. The unit according to claim 3, in which the plurality of handpieces (4) on the first fluid supply branch (3) includes a syringe (4s), **characterised in that** the implementation means (13) consist of a pneumatically controlled second valve (13v) acting on the fourth means (16) of interception consisting of a third fluid passage valve (16v) positioned on a second branch (21) connecting the first branch (3) that supplies the syringe (4s), to the branches connecting the remaining handpieces (4) so as to allow the flow of disinfectant / sterilising fluid on programmed activation of the unit (100).

11. The unit according to claim 10, **characterised in that** the second branch (21) for the passage of the disinfectant / sterilising fluid discharges upstream of the first means (5) of interception positioned on the respective handpieces (4) with respect to the fluid flow direction (F).

12. The unit according to claim 10, **characterised in that** timer means (22) act on the fourth means (16) of interception to allow programming of the treatment time, that is to say activation of the flow of the fluid, into the first branch (3).

13. The unit according to claim 10, **characterised in that** it comprises means (23) for adjusting the passage of air at the pneumatically controlled second valve (13v) to allow the discharge of the air circulating in the second conduit (14) at the end of the treatment.

14. The unit according to claim 2, **characterised in that** a check valve (24) is positioned between the second and third means (11, 15) of interception in order to prevent a flow of fluid towards the container (9) of disinfectant / sterilising fluid at the end of the treatment.

15. The unit according to claim 1, **characterised in that** the support body (8) consists of a protective guard (8c) which can be associated with the dental unit (R).

16. The unit according to claim 4, **characterised in that** the first valve (12v) is controlled by a relative lever (12a) positioned on the outside of the support body (8).

17. The unit according to claim 10, **characterised in that** the second valve (13v) is controlled by an appropriate pushbutton (13a) positioned on the outside of the support body (8).

18. The unit according to claim 12, **characterised in that** the timer means (22) can comprise an adjustment knob (22a) positioned on the outside of the support body (8).

## Patentansprüche

1. Nebenaggregat zwecks desinfizierenden Behandlungen an zahnärztlichen Ausrüstungen (R), enthaltend wenigstens:
- eine Flüssigkeitszuführleitung (1), angeschlossen mit einem Ende an das allgemeine Wassernetz (2) und mit dem anderen an die zahnärztliche Ausrüstung (R), und zwar mit Hilfe einer ersten Zweigleitung (3), welche wenigstens eine Reihe von Behandlungsinstrumenten (4) speist, enthaltend eine Anzahl von Handstücken; wobei erste Mittel (5) zum Absperren der Flüssigkeit an den Handstücken (4) vorgesehen sind, so dass die Zufuhr je nach Bedarf erlaubt ist;
- einen Körper (8) ausserhalb der zahnärztlichen Ausrüstung (R), der wenigstens einen Behälter (9) für Desinfizier-/Sterilisierflüssigkeit enthält, welcher mit Hilfe einer ersten Leitung (10) an die Flüssigkeitszuführleitung (1) angeschlossen werden kann;
- zweite Absperrmittel (11), positioniert an der Flüssigkeitszuführleitung (1) und dazu bestimmt, das Absperren der Flüssigkeitszufuhr wenigstens in der ersten Zweigleitung (3) während der die Desinfizier-/Sterilisierflüssigkeit verwendenden Behandlung zu erlauben;
- Mittel (12, 13) zur Voreinstellung und Aktivierung der Behandlung, die auf wenigstens die erste Leitung (10) und auf die zweiten Absperrmittel (11) wirken, so dass es der Behandlungsflüssigkeit erlaubt ist, durch die erste Zweigleitung (3) zu fliessen;
**dadurch gekennzeichnet, dass** es wenigstens enthält:
- eine Luftzuführleitung (6), angeschlossen mit ihrem Eingang an eine Druckluftquelle (7) und mit ihrem Ausgang an die zahnärztliche Ausrüstung; wobei die genannten Mittel (12, 13) zur Voreinstellung und Aktivierung an einer zweiten Luftzuführleitung (14) angeordnet sind, angeschlossen an die Luftzuführleitung (6) und aufgenommen in dem Trägerkörper (8).

2. Aggregat nach Patentanspruch 1, **dadurch gekennzeichnet, dass** die Mittel (12, 13) zur Voreinstellung und Aktivierung auf die zweiten Absperrmittel (11) und auf dritte Absperrmittel (15) wirken, angeordnet an der ersten Leitung (10) und aufgenommen in dem Trägerkörper (8).

3. Aggregat nach Patentanspruch 2, **dadurch gekennzeichnet, dass** die Mittel (12, 13) zur Voreinstellung und Aktivierung geteilt und in zwei getrennten Bereichen der zweiten Luftzuführleitung (14) angeordnet sind, wobei die Voreinstellungsmittel (12) sich dicht an dem Anschluss zwischen der zweiten Leitung (14) und der Luftzuführleitung (6) befinden, so dass die Aktivierung der zweiten und dritten Absperrmittel (11, 15) möglich ist, die an der ersten Leitung (10) positioniert sind, und die Aktivierungsmittel (13) an der zweiten Leitung (14) und dicht an vierten Absperrmitteln (16) positioniert sind, wobei sie auf die erste Zweigleitung (3) für die Flüssigkeitszufuhr an die Handstücke (4) wirken.

4. Aggregat nach Patentanspruch 3, **dadurch gekennzeichnet, dass** die Voreinstellungsmittel (12) aus einem ersten Ventil (12v) mit zwei Positionen bestehen, jeweils eine zum Schliessen der Verbindung zwischen der Luftzuführleitung (6) und der zweiten Leitung (14), und eine Position zum Verbinden der Luftzuführleitung (6) mit der zweiten Leitung (14), versehen mit zwei Zweigleitungen (14a, 14b), die sich mit den zweiten und dritten Absperrmitteln (11, 15) verbinden, welche an der ersten Leitung (10) positioniert sind.

5. Aggregat nach Patentanspruch 4, **dadurch gekennzeichnet, dass** die zweite Luftzuführleitung (14) zu dem Behälter (9) für die Desinfizier-/Sterilisierflüssigkeit führt, so dass ein Fliessen der Desinfizier-/Sterilisierflüssigkeit in der ersten Leitung (10) an der Anschlussposition des ersten Ventils (12v) erlaubt ist.

6. Aggregat nach Patentanspruch 5, **dadurch gekennzeichnet, dass** die zweite Luftzuführleitung (14) mit einer Luftfiltereinheit (17) versehen ist, positioniert stromaufwärts des Behälters (9) für die Desinfizier-/Sterilisierflüssigkeit.

7. Aggregat nach Patentanspruch 5, **dadurch gekennzeichnet, dass** die zweite Luftzuführleitung (14) mit Mitteln (18) zur Reduzierung des Luftdruckes versehen ist, um ein kontrolliertes Strömen der Luft in den Flüssigkeitsbehälter (9) zu erlauben.

8. Aggregat nach Patentanspruch 4, **dadurch gekennzeichnet, dass** die zweite Luftzuführleitung (14) mit einem Sicherheitsablass (19) der Luft versehen ist, dazu bestimmt, den Ablass der Luft in der geschlossenen Position der Verbindung zwischen der Luftzuführleitung (6) und der zweiten Leitung (14) zu erlauben.

9. Aggregat nach Patentanspruch 4, **dadurch gekennzeichnet, dass** die zweite Luftzuführleitung (14) an eine Vorrichtung (20) angeschlossen ist, um den Druck in der zweiten Leitung (14) zu messen und anzuzeigen.

10. Aggregat nach Patentanspruch 3, bei welchem die Anzahl von Handstücken (4) an der ersten Zweigleitung (3) für die Flüssigkeitszufuhr eine Spritze (4s) enthält, **dadurch gekennzeichnet, dass** die Aktivierungsmittel (13) aus einem pneumatisch gesteuerten zweiten Ventil (13v) bestehen, das auf die vierten Absperrmittel (16) wirkt, bestehend aus einem dritten Ventil (16v) für den Durchlass der Flüssigkeit und angeordnet an einer zweiten Zweigleitung (21), welche die erste, die Spritze (4s) speisende Zweigleitung (3) mit den Zweigleitungen verbindet, welche die restlichen Handstücke (4) verbinden, um dass das Fliessen der Desinfizier-/Sterilisierflüssigkeit nach einer programmierten Aktivierung der Einheit (100) zu erlauben.

11. Aggregat nach Patentanspruch 10, **dadurch gekennzeichnet, dass** die zweite Zweigleitung (21) für den Durchlass der Desinfizier-/Sterilisierflüssigkeit stromaufwärts der ersten Absperrmittel (5) mündet, angeordnet an den jeweiligen Handstücken (4) im Verhältnis zu der Fliessrichtung (F) der Flüssigkeit.

12. Aggregat nach Patentanspruch 10, **dadurch gekennzeichnet, dass** Taktgebermittel (22) auf die vierten Absperrmittel (16) wirken, um die Behandlungsdauer zu programmieren, das heisst die Aktivierung des Flusses der Flüssigkeit in die erste Zweigleitung (3).

13. Aggregat nach Patentanspruch 10, **dadurch gekennzeichnet, dass** es Mittel (23) zum Regulieren des Durchströmens von Luft an das pneumatisch gesteuerte zweite Ventil (13v) enthält, um das Ablassen der Luft zu erlauben, die in der zweiten Leitung (14) am Ende der Behandlung zirkuliert.

14. Aggregat nach Patentanspruch 2, **dadurch gekennzeichnet, dass** ein Rückschlagventil (24) zwischen den zweiten und dritten Absperrmitteln (11, 15) angeordnet ist, um ein Fliessen der Flüssigkeit in Richtung des Behälters (9) für die Desinfizier-/Sterilisierflüssigkeit am Ende der Behandlung zu verhindern.

15. Aggregat nach Patentanspruch 1, **dadurch gekennzeich** **net, dass** der Trägerkörper (8) aus einem Schutzgehäuse (8c) besteht, welcher der zahnärztlichen Ausrüstung (R) zugeordnet werden kann.

16. Aggregat nach Patentanspruch 4, **dadurch gekennzeichnet, dass** das erste Ventil (12v) durch einen entsprechenden Hebel (12a) gesteuert wird, angeordnet ausserhalb des Trägerkörpers (8).

17. Aggregat nach Patentanspruch 10, **dadurch gekennzeichnet, dass** das zweite Ventil (13v) durch eine entsprechenden Drucktaste (13a) gesteuert wird, angeordnet ausserhalb des Trägerkörpers (8).

18. Aggregat nach Patentanspruch 12, **dadurch gekennzeichnet, dass** die Taktgebermittel (22) einen Regulierknopf (22a) enthalten können, angeordnet ausserhalb des Trägerkörpers (8).

## Revendications

1. Une unité auxiliaire pour la désinfection d'unités dentaires (R) comprenant au moins :
- une ligne (1) d'alimentation de fluide reliée, à une extrémité, au réseau d'eau général (2) et, à l'autre extrémité, à l'unité dentaire (R) par l'intermédiaire d'une première branche (3) qui alimente au moins une série d'instruments - patient (4) comprenant une pluralité de pièces à main ; des premiers moyens (5) d'interception du fluide étant prévus sur les pièces à main (4) de manière à en permettre l'alimentation quand cela est nécessaire ;
- un corps (8), extérieur à l'unité dentaire (R), supportant au moins un récipient (9) de fluide de désinfection / stérilisation qui peut être relié, par l'intermédiaire d'un premier conduit (10), à la ligne (1) d'alimentation de fluide ;
- des deuxièmes moyens (11) d'interception positionnés sur la ligne (1) d'alimentation de fluide et destinés à permettre une fermeture de l'alimentation de fluide au moins dans la première branche (3) durant le traitement avec le fluide de désinfection / stérilisation ;
- des moyens (12, 13) pour préparer et activer le traitement, qui agissent au moins sur le premier conduit (10) et sur les deuxièmes moyens (11) d'interception de manière à permettre au fluide de traitement de passer à travers la première branche (3) ;
ladite unité étant **caractérisée en ce qu'**elle comprend au moins :
- une ligne (6) d'alimentation d'air reliée, en entrée, à une source (7) d'air comprimé et, en sortie, à l'unité dentaire ; lesdits moyens de préparation et d'activation (12, 13) étant positionnés sur un second conduit (14) d'alimentation d'air relié à la ligne (6) d'alimentation d'air, et étant logés dans le corps (8) de support.

2. L'unité selon la revendication 1, **caractérisée en ce que** les moyens de préparation et d'activation (12, 13) agissent sur les deuxièmes moyens (11) d'interception et sur des troisièmes moyens (15) d'interception positionnés sur le premier conduit (10) et logés dans le corps (8) de support.

3. L'unité selon la revendication 2, **caractérisée en ce que** les moyens de préparation et d'activation (12, 13) sont subdivisés et positionnés dans deux zones séparées du second conduit (14) d'alimentation d'air, les moyens de préparation (12) étant situés à proximité du raccordement entre le second conduit (14) et la ligne (6) d'alimentation d'air de manière à permettre l'activation des deuxièmes et troisièmes moyens (11, 15) d'interception positionnés sur le premier conduit (10), et les moyens d'activation (13) étant positionnés sur le second conduit (14) et à proximité de quatrièmes moyens (16) d'interception qui agissent sur la première branche (3) d'alimentation du fluide aux pièces à main (4).

4. L'unité selon la revendication 3, **caractérisée en ce que** les moyens de préparation (12) consistent en une première soupape (12v) à deux positions pour, respectivement, la fermeture du raccordement entre la ligne (6) d'alimentation d'air et le second conduit (14), et une position de raccordement entre la ligne (6) d'alimentation d'air et le second conduit (14) comportant deux branches (14a, 14b) qui se relient avec les deuxièmes et troisièmes moyens (11, 15) d'interception positionnés sur le premier conduit (10).

5. L'unité selon la revendication 4, **caractérisée en ce que** le second conduit (14) d'alimentation d'air débouche dans le récipient (9) de fluide de désinfection / stérilisation de manière à permettre un afflux de fluide de désinfection / stérilisation dans le premier conduit (10) quand la première soupape (12v) est dans la position de raccordement.

6. L'unité selon la revendication 5, **caractérisée en ce que** le second conduit (14) d'alimentation d'air est pourvu d'une unité (17) de filtrage de l'air positionnée en amont du récipient (9) de fluide de désinfection / stérilisation.

7. L'unité selon la revendication 5, **caractérisée en ce que** le second conduit (14) d'alimentation d'air est pourvu de moyens (18) de réduction de la pression de l'air de manière à permettre un flux contrôlé de l'air dans le récipient (9) de fluide.

8. L'unité selon la revendication 4, **caractérisée en ce que** le second conduit (14) d'alimentation d'air est pourvu d'une sortie d'air (19) de sécurité destinée à permettre l'échappement de l'air dans la position de fermeture du raccordement entre la ligne (6) d'alimentation d'air et le second conduit (14).

9. L'unité selon la revendication 4, **caractérisée en ce que** le second conduit (14) d'alimentation d'air est relié à un dispositif (20) destiné à mesurer et à afficher la pression présente dans ce même second conduit (14).

10. L'unité selon la revendication 3, dans laquelle la pluralité de pièces à main (4) situées sur la première branche (3) d'alimentation de fluide comprend une seringue (4s), **caractérisée en ce que** les moyens d'activation (13) consistent en une deuxième soupape (13v) à commande pneumatique qui agit sur les quatrièmes moyens (16) d'interception consistant en une troisième soupape (16v) de passage du fluide positionnée sur une seconde branche (21) reliant la première branche (3), qui alimente la seringue (4s), aux branches reliant les autres pièces à main (4) de manière à permettre l'afflux de fluide de désinfection / stérilisation lors de l'activation programmée de l'unité (100).

11. L'unité selon la revendication 10, **caractérisée en ce que** la seconde branche (21) pour le passage du fluide de désinfection / stérilisation débouche en amont des premiers moyens (5) d'interception positionnés sur les pièces à main (4) respectives par rapport à la direction (F) d'écoulement du fluide.

12. L'unité selon la revendication 10, **caractérisée en ce que** des moyens de temporisation (22) agissent sur les quatrièmes moyens (16) d'interception afin de permettre une programmation du temps de traitement, c'est-à-dire d'activation de l'afflux du fluide, dans la première branche (3).

13. L'unité selon la revendication 10, **caractérisée en ce qu'**elle comprend des moyens (23) destinés à réguler le passage d'air au niveau de la deuxième soupape (13v) à commande pneumatique afin de permettre l'échappement de l'air circulant dans le second conduit (14) à la fin du traitement.

14. L'unité selon la revendication 2, **caractérisée en ce qu'**une soupape (24) de non-retour est positionnée entre les deuxièmes et troisièmes moyens (11, 15) d'interception de manière à empêcher un afflux de fluide vers le récipient (9) de fluide de désinfection / stérilisation à la fin du traitement.

15. L'unité selon la revendication 1, **caractérisée en ce que** le corps (8) de support consiste en un carter de protection (8c) qui peut être associé à l'unité dentaire (R).

16. L'unité selon la revendication 4, **caractérisée en ce que** la première soupape (12v) est actionnée par l'intermédiaire d'un levier (12a) correspondant situé à l'extérieur du corps (8) de support.

17. L'unité selon la revendication 10, **caractérisée en ce que** la deuxième soupape (13v) est actionnée par l'intermédiaire d'un bouton-poussoir (13a) approprié situé à l'extérieur du corps (8) de support.

18. L'unité selon la revendication 12, **caractérisée en ce que** les moyens de temporisation (22) peuvent comprendre un bouton de réglage (22a) situé à l'extérieur du corps (8) de support.
